Europäisches Patentamt

(19) European Patent Office

Office européen des brevets

(11) Publication number: **0 317 536**
**A2**

## (12) EUROPEAN PATENT APPLICATION

(21) Application number: **88850379.4**

(22) Date of filing: **03.11.88**

(51) Int. Cl.4: **G 11 B 7/09**

(30) Priority: **13.11.87 US 118040**

(43) Date of publication of application:
**24.05.89 Bulletin 89/21**

(84) Designated Contracting States: **DE FR GB**

(71) Applicant: **International Business Machines Corporation**
**Old Orchard Road**
**Armonk, N.Y. 10504 (US)**

(72) Inventor: **Cohen, Donald Kenneth**
**1800 W. White Oak Ct.**
**Tucson Arizona 85746 (US)**

**Davie, Neil Roger**
**8499 E. Woodland Road**
**Tucson Arizona 85749 (US)**

**Underwood, Kathryn Lee**
**2635 E. Cannon Drive**
**Phoenix Arizona 85028 (US)**

(74) Representative: **Ekström, Gösta E.**
**IBM Svenska AB Intellectual Property Department**
**S-163 92 Stockholm (SE)**

(54) Employing the principles of separability for detecting light beams.

(57) Range and focus conditions are detected by comparing the current separability factor of a light beam impinging upon a detector (62) and the separability factor of the detector. Signals from independent portions (A, B, C, D) of the detector are processed to yield a given separability factor to the detector. When the light beam impinging on the detector has a comparable separability factor a zero signal results, otherwise signal amplitudes and polarities signify degree of differences in the separability factors which are relatable to range hence focus conditions. Detector output signals are normalized in an antithetical manner and then compared to a certain comparison of the separability factors of the detector and impinging light beam.

Fig. 4

Description

## EMPLOYING THE PRINCIPLES OF SEPARABILITY FOR DETECTING LIGHT BEAMS

This invention relates to optical systems, particularly those optical systems employing light beams changing between circular and ovate in cross-sectional shape. The invention is particularly useful in focus error detection apparatus, as well as other range indicating apparatus.

Typically, focus error signals are generated in optical disk recorders employing so-called quad detectors by summing the signals from two of the detectors and subtracting that sum from the sum of the other two detectors. The difference signal is divided by the sum of the signal amplitudes supplied by all four of the detectors. This arrangement provides accurate focus indications when the axis of the focus beam impinging on the focus detector is precisely aligned with the center of the detector. However, if the quad detector is not centered on the axis of the focus beam, then a focus error offset occurs, i.e., it is impossible to precisely control the focus. As an example, European Patent Application 157020, published October 9, 1985, describes this problem. The solution indicated in the European Patent Application is to provide offset compensation for compensating for the detector alignment error. Even with the accommodation of offset error, the focus system must be precisely aligned.

For cost reducing the costs of optical recorders and other optical mechanisms, it is desired to remove the preciseness with which the detector is aligned with the axis of a focus beam.

The book "Linear Systems, Fourier Transforms, And Optics" by Jack D. Gaskill, University of Arizona, published by John Wiley & Sons, New York, copyright 1978, on pages 66 through 69, describes two-dimensional functions which are separable. Gaskill defines "separability" as characterizing those separable functions which can be written as a product of one-dimension functions; that is, the product of two functions equals the product of separate functions; that is function (x,y) equals the "function (x) function (y)" product. Gaskill shows, for analysis purposes, a rectangular, triangular and sine, as well as a Gaussian function which are two-dimensional, separable functions. In mathematics, this says that in both mathematical directions, the relative or normalized relationships are identical even though the magnitude of the elements may change.

Applicants have discovered that the notion of separability as set forth above, can be applied to optical systems for increasing the tolerances of detector placements with respect to the axis of a light beam.

In accordance with the present invention, a detection system having a plurality of detection portions is symmetrically disposed about a given axis and includes processing circuits which analyze the output signals of the detection portion for yielding a separable function in the detector. A light beam to be analyzed, such as for focus or range indication beam, exhibits the same separable function when at a given focus or range condition, such that the focus error signal applied at focus is always zero even though there is lateral offset in two dimensions along a plane perpendicular to the axis of the light beam. When the light beam becomes out of focus, in an astigmatic system, for example, the light beam has its cross section distorted. The result of such distortion is that the light beam no longer exhibits the detector's separable function and thereby generates an out-of-focus condition signal.

Accordingly, a focus condition is detected by comparing the separable functions of an impinging light beam and a detector used to detect the light beam.

In another aspect of the invention, the output signal from the various portions of the detector are combined in a symmetrically-opposing, normalized set of the signals for generating an error signal. Such arrangement can give a separable function to the detector for detecting focus, range and other parameters of the light beam.

In accordance with the detailed aspects of the invention, an enhanced optical disk recorder is provided which has high tolerance to the physical location of a detector with respect to a light beam axis as well as to the light beam optics by combining separable functions of the detector for increasing lateral displacement tolerances with respect to the axis of a light beam.

The foregoing and other objects, features, and advantages of the invention, which are defined in the attached claims, will be apparent from the following more particular description of the preferred embodiments of the invention, as illustrated in the accompanying drawings.

Figs. 1A and IB are graphs showing results of focus error signals and resultant offsets in the prior art and in accordance with the invention, respectively.

Fig. 2 is a block diagram of an optical disk recorder-player in which the present invention is advantageously practiced.

Figs. 3 and 4 show focus error detection circuits usable in the Fig. 2-illustrated recorder-reader which employ the principles of the present invention.

Figs. 5A, 5B, and 5C are diagrams showing the lateral offset aspects and the separability feature of an optical beam being focus detected.

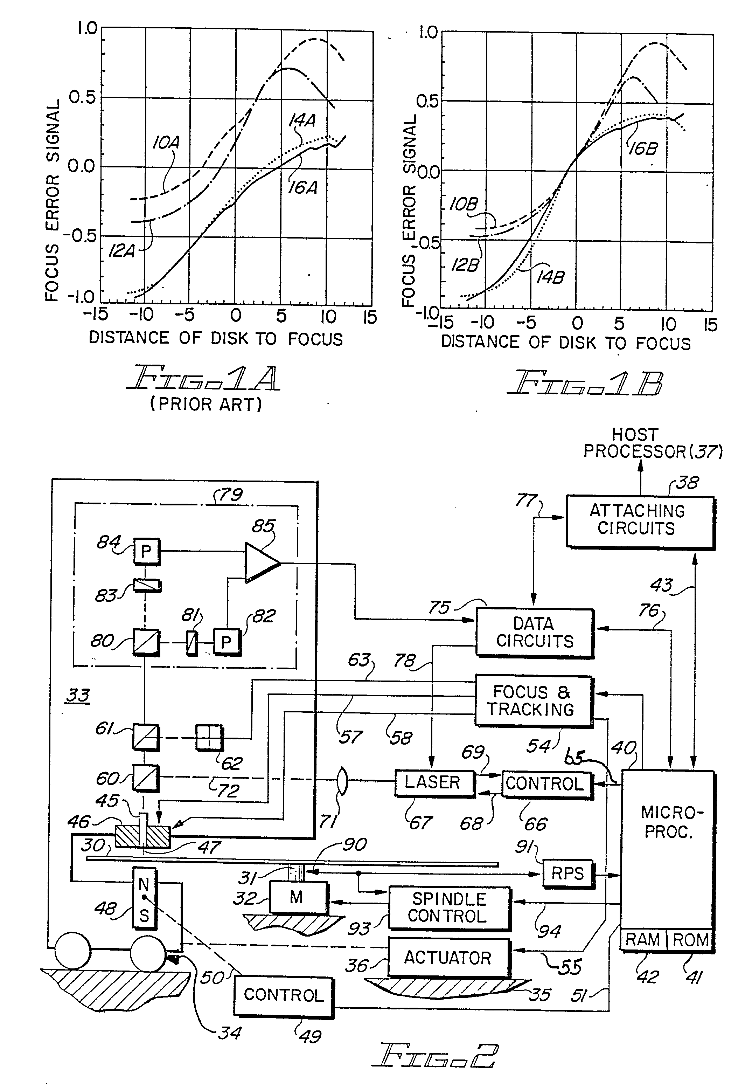

Referring now more particularly to the drawings, like numerals indicate like parts and structural features in the various diagrams. Fig. 1A illustrates the results of practicing the prior art wherein the focus error signal is generated by the equation $(A+C)-(B+D)/(A+B+C+D)$.

The zero point on the horizontal ordinates represents focus condition while on the vertical ordinate represents zero focus error signal amplitude. It is desired that all focus error signal amplitudes go through the intersection of these two ordinates.

Curves 10A, 12A, 14A and 16A were generated based upon various lateral offsets of a detector from the axis of a focus-indicating light beam. Curves 12A and 14A represent predicted response while curves 10A and 16A represent experimental test results. Note there is substantial offset at a near-focus condition resulting in a slightly degraded mode of the operation of the optical system. Identical-lateral offsets are made while practicing the present invention resulting in the curves shown in Fig. 1B. Curve 10B corresponds to curve 10A, i.e., the same lateral offset, while curve 12B corresponds to curve 12A, and so forth for curves 14B and 16B. Note that after practicing the invention, the offset at the ideal focus condition is practically zero.

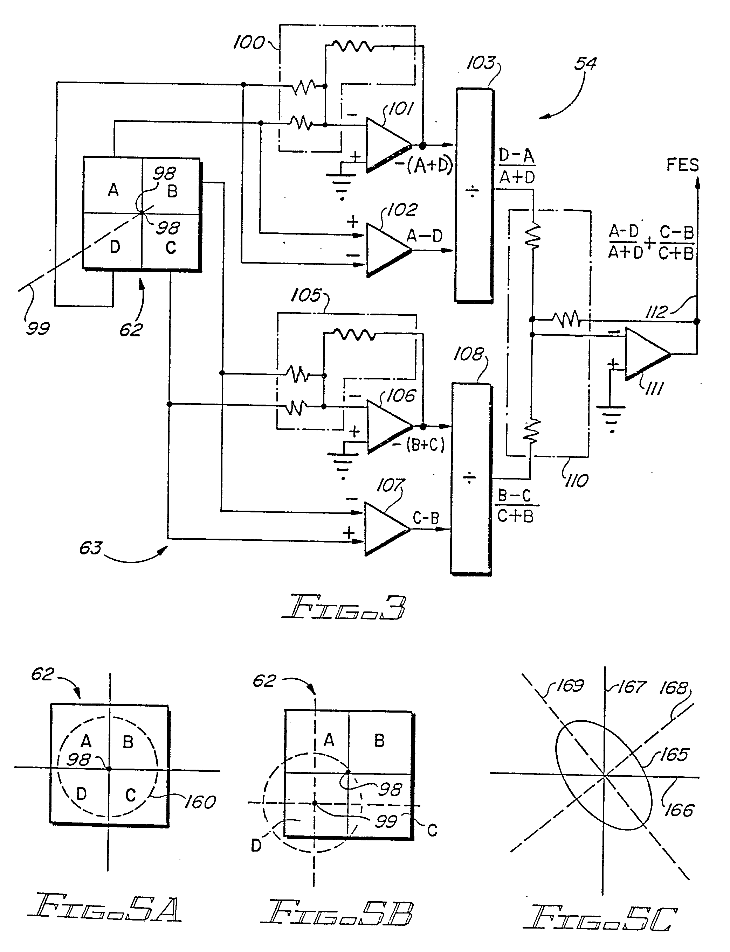

An optical recorder with which the present invention may be advantageously employed is shown in Fig. 2. A magnetooptic record disk 30 is mounted for rotation on spindle 31 by motor 32. Optical head carrying arm 33 on head arm carriage generally denoted by numeral 34 moves radially of disk 30. A frame 35 of recorder suitably mounts carriage 34 for reciprocating radial motions. The radial motions of carriage 34 enable access to anyone of a plurality of concentric tracks or circumvolutions of a spiral track for recording and recovering data on and from the disk. Linear actuator suitably mounted on frame 35, radially moves carriage 34 for enabling the track accessing. The recorder is suitably attached to one or more host processors 37, such host processors may be control units, personal computers, large system computers, communication systems, image process processors, and the like. Attaching circuits 38 provide the logical and electrical connections between the optical recorder and the attaching host processors 37.

Microprocessor 40 controls the recorder including the attachment to the host processor 37. Control data, status data, commands and the like are exchanged between attaching circuits 38 and microprocessor 40 via bidirectional bus 43. Included in microprocessor 40 is a program or microcode storing read only memory (ROM) 41 and a data and control signal storing random access memory (RAM) 42.

The optics of the recorder include an objective or focussing lens 45 mounted for focussing and tracking motions on head arm 33 by fine actuator 46. This actuator includes mechanisms for moving lens 45 toward and away from disk 30 for focussing and track following and seeking movements radially of disk 30; for example, for changing tracks within a range of 100 tracks so that carriage 34 need not be actuated each time a track adjacent to a track currently being accessed is to be accessed. Numeral 47 denotes the two-way light path between lens 45 and disk 30.

In magnetooptic recording, magnet 48 provides a weak magnetic steering field for directing the remnant magnetization direction of a small spot on disk 30 illuminated by laser light from lens 46. The laser light spot heats the illuminate spot on the record disk to a temperature above the Curie point of the magnetooptic layer (not shown, but can be an alloy of rare earth and transitional metals as taught by Chaudhari et al., US patent 3,949,387). This heating enables magnet 48 to direct the remnant magnetization to a desired direction of magnetization as the spot cools below the Curie point temperature. Magnet 48 is shown as oriented in the "write" direction, i.e. binary ones are recorded on disk 30 normally are "north pole remnant magnetization". To erase disk 30, magnet 48 rotates so the south pole is adjacent disk 30. Magnet 48 control 49 which is mechanically coupled to rotatable magnet 48 as indicated by dashed line 50, controls the write and erase directions. Microprocessor 40 supplies control signals over line 51 to control 49 for effecting reversal of the recording direction.

It is necessary to control the radial position of the beam following path 47 such that a track or circumvolution is faithfully followed and that a desired track or circumvolution is quickly and precisely accessed. To this end, focus and tracking circuits 54 control both the coarse actuator 36 and fine actuator 46. The positioning of carriage 34 by actuator 36 is precisely controlled by control signals supplied by circuits 54 over line 55 to actuator 36. Additionally the actuator control by circuits 54 is exercised by control signals travelling over lines 57 and 58 respectively for focus and fine tracking and switching actions of fine actuator 46.

The focus and tracking position sensing is achieved by analyzing laser light reflected from disk 30 over path 47, thence through lens 45, through one-half mirror 60 and to be reflected by half-mirror 61 to a so-called "quad detector" 62. Quad detector 62 also includes optical means (not shown) for optically processing the beam to create focus indicators. Such processing is well know as by splitting the beam to travel along two paths of different lengths by distorting the beam cross-sectional shape. Quad detector 62 has four photo elements which respectively supply signals on four lines collectively denominated by numeral 63 to focus and tracking circuits 54. Aligning one axis of the detector 62 with a track center line, track following operations are enabled. Focussing operations are achieved by comparing the light intensities detected by the four photo elements in the quad detector 62. Focus and tracking circuits 54 analyze the signals on lines 63 to control both focus and tracking.

Recording or writing data onto disk 30 is next described. It is assumed that magnet 48 is rotated to the desired position for recording data. Microprocessor 40 supplies a control signal over line 65 to laser control 66 for indicating that a recording operation is to ensue. This means that laser 67 is energized by control 66 to emit a high intensity laser light beam for recording; in contrast, for reading, the laser 67 emitted laser light beam is a reduced intensity for not heating the laser illuminated spot on disk 30 above the Curie point. Control 66 supplies its control signal over line 68 to laser 67 and receives a feedback signal over line 69 indicating the laser 67 emitted light intensity. Control 68 adjusts the light intensity to the desired value. Laser 67, a semiconductor laser such as a Gallium Arsenide diode laser, can be modulated by data signals so the emitted light beam represents the data to be recorded by such intensity modulation. In this regard, data circuits 75 (later described) supply data indicating signals over line 78 to laser 67 for effecting such modulation. This modulated light beam passes through collimating lens 71 toward half mirror 60 for being reflected toward disk 30 through lens 45. Data circuits 75 are prepared for recording by the microprocessor 40 supplied suitable control signals over line 76. Microprocessor 40 in preparing circuits 75 is responding to commands for recording received from a host processor 37 via attaching circuits 38. Once data circuits 75 are prepared, data is transferred directly between host processor 37 data circuits 75 through attaching circuits 38. Data circuits 75 also ancillary circuits (not shown) relating to disk 30 format signals, error detection and correction and the like. Circuits 75, during a read or recovery operation, strip the ancillary signals from the readback signals before supplying corrected data signals over bus 77 to host processor 37 via attaching circuits 38.

Reading or recovering data from disk 30 for transmission to a host processor requires optical and electrical processing of the laser light beam from the disk 30. That portion of the reflected light (which has its linear polarization from polarizer 70 rotated by disk 30 recording using the Kerr effect) travels along the two-way light path 47, through lens 45 and half-mirrors 60 and 61 to the data detection portion 79 of the head arm 33 optics. It is to be realized that such optics may take diverse arrangements, one possible arrangement is described herein. The practice of the present invention is independent of this arrangement. Half-mirror or beam splitter 80 divides the reflected beam into two equal intensity beams both having the same reflected rotated linear polarization. The half-mirror 80 reflected light travels through a first polarizer 81 which is set to pass only that reflected light which was rotated when the remnant magnetization on disk 30 spot being accessed has a "north" or binary one indication. This passed light impinges on photo cell 82 for supplying a suitable indicating signal to differential amplifier 85. When the reflected light was rotated by a "south" or erased pole direction remnant magnetization, then polarizer 81 passes no or very little light resulting in no active signal being supplied by photocell 82. The opposite operation occurs by polarizer 83 which passes only "south" rotated laser light beam to photo cell 84. Photocell 84 supplies its signal indicating its received laser light to the second input of differential amplifier 85. The amplifier 85 supplies the resulting difference signal (data representing) to data circuits 75 for detection. The detected signals include not only data that is recorded but also all of the so-called ancillary signals as well. The term data as used herein is intended to include any and all information bearing signals, preferably of the digital or discrete value type. The rotation position and rotational speed of spindle 31 is sensed by a suitable tachometer or emitter sensor 90. Sensor 90, preferably of the optical sensing type that senses dark and light spots on a tachometer wheel (not shown) of spindle 31, supplies the "tach" signals (digital signals) to RPS circuit 91 which detects the rotational position of spindle 31 and supplies rotational information bearing signals to micropro cessor 40. Microprocessor 40 employs such rotational signals for controlling access to data storing segments on disk 30 as is widely practiced in the magnetic data storing disks. Additionally, the sensor 90 signals also travel to spindle speed control circuits 93 for controlling motor 32 to rotate spindle 31 at a constant rotational speed. Control 93 may include a crystal controlled oscillator for controlling motor 32 speed, as is well known. Microprocessor 40 supplies control signals over line 94 to control 93 in the usual manner.

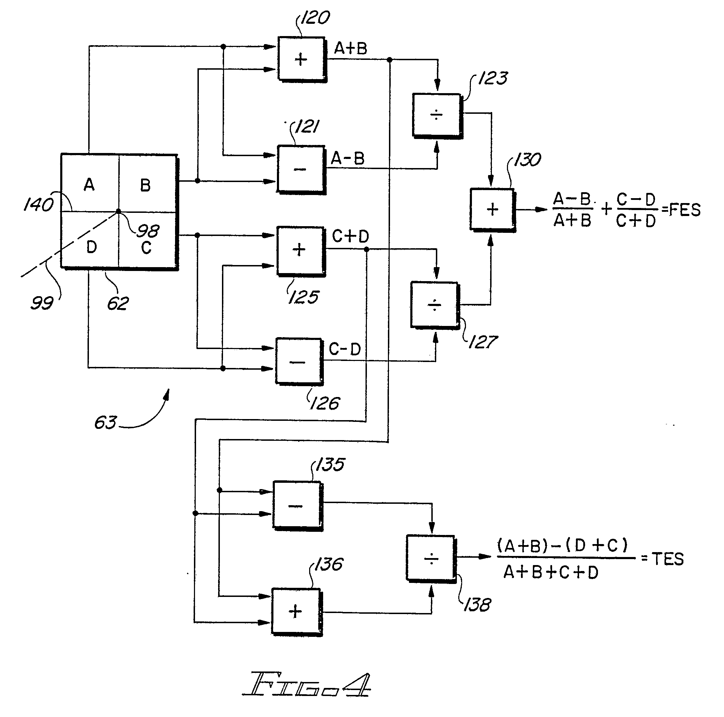

Figs. 3 and 4 show two sets of electrical connections for combining signals from quad detector 62, portions A, B, C and D for creating a separable function in the detector to achieve the purposes of the present invention. In Fig. 3, quad detector 62 has its four elements in a square centered on an axis point 98. Ideally, the focus beam axis 99 should be aligned with point 98. Electrical circuit 54 solves the equation

$$((A\text{-}D)/(A+D)) + ((C\text{-}B)/(C+B))$$

which represents the focus error signal being supplied over line 112. Analog adder 100 (a current adder of known design) is electrically connected to detector portions A and D, such that differential amplifier 101 supplies an output signal representative of the inversion of sum $A+D$. Differential amplifier 102 solves the equation A-D by its connections to detector portions A and D. Analog division circuit 103 creates a signal representative of the value $(D\text{-}A)/(A+D)$. Current adding circuit 105 sums the output currents from detector portions C and B and supplies its inversion through amplifier 106 to analog division circuit 108. Differential amplifier 107 subtracts the signal from detector portion B from the signal of detector portion C and supplies the differential signal to division circuit 108 such that the term $(B\text{-}C)/(C+B)$ is supplied by division circuit 108 to summing circuit 110. Summing circuit 110 combines the output signals of division circuits 103 and 108 to supply the focus error signal through inverting amplifier 111 to line 112. The output signal amplitude can be expected to be about twice the amplitude of the prior art system described above.

Fig. 4 has an identical circuit arrangement as shown in Fig. 3, except the arrangement uses results in a different equation for the focus error signal (FES) as an output of analog summing circuit 130. However, the separable function is maintained for detector 62. Analog summing circuit 120 constructed as the circuits in Fig. 3 sum the outputs of detector portions A and B while differential circuit 121 takes the difference of signal amplitudes from portions A and B. The output currents of circuits 120 and 121 are divided by analog division circuit 123 which then supplies its quotient signal to analog summing circuit 130. In a similar manner, summing circuit 125 sums the output of portions D and C while differential circuit 126 measures the difference current between these portions. Division circuit 127 divides the output of circuit 126 by the output of circuit 125 and supplies its quotient signal to summer 130. Additionally, a tracking error signal (TES) can be generated by applying the output signals of summing circuits 120 and 125 which provide the numerator for the output equation shown to the right of divide circuit 138. The sum of the currents of all the detector 62 portions is summed by circuit 136 by its connection to circuits 120 and 125. It provides the divisor to division circuits 138. In this arrangement, the line 140 is aligned with the track being followed. A similar tracking error circuit can be added to the circuit of Fig. 3.

Fig. 5A shows the beam in focus as circle 160 superposed on detector 62 and symmetrically disposed about the center point 98. In this case, the light impinging upon all of four detectors A, B, C and D is equal (focus is indicated). Fig. 5B shows a lateral offset situation where the beam axis 99 is offset from the center point 98 of detector 62. Examination of Fig. 5B will show that the beam 161 still in focus through the normalization provides a negative number A-D in the Fig. 3 configuration which is normalized by dividing the negative number by the sum the two electrical currents. In a similar manner, the difference current C-B provides its relatively large positive amplitude which is normalized by the division of the sum of the current portions B and C. The normalization accommodates changes in the total amount of light impinging upon any of the detector portions. For example, the difference amplitude between the light impinging on portions D and C is very apparent. A similar difference appears between portions A and B. In a similar manner, the ratios of current amplitudes from portions A and D with portions B and C are also apparent. By making the equation symmetrical, i.e., A-D and C-B, the signs of the equation accommodate variations in light impinging upon the relative detector portions. In this manner, the separable functions, herein termed "separability" provide self-accommodation of lateral offset as the beam at focus for ensuring a zero or close to zero FES irrespective of lateral offsets. It should be noted that the beam 161 may not be perfectly circular at focus and that the portions A, B, C and D may, in fact, provide differing current amounts. These two factors may result in a slight offset which is more tolerable and acceptable than the offsets in the focus error signal provided without the self-accommodation of lateral offsets by using separability.

Fig. 5C shows an out-of-focus beam 165 which has stepped away from the separability provided when the beam is in focus. Separability functions of the detector are represented in the graph having ordinates 166 and 167. Because the beam is then made ovate as by an astigmatic detection system, the beam is elongated along axis 169 indicates a focus error when lens 45 is too close to disk 30, while elongation from disk 30 of the beam ovateness along axis 168 indicates a focus error when lens 45 is too far. For either focus error, there no longer is like separability between the beam 165 and the detector 62. As a result, the focus error signal greatly increases; the direction of increase (positive or negative amplitude) is determined by the direction of rotation of the out-of-focus beam 165 with respect to the detector 62.

## Claims

1. In a method of detecting a range-indicating signal, including the steps in combination:
selecting a radiation beam detector (62) having four detection portions (A, B, C, D) arranged symmetrically about an axis such that a first set of two of the portions (first and third portions A and C) are aligned on a first diagonal and a second set of two of the portions (second and fourth portions B and D) are aligned on a second diagonal transversely extending to said first diagonal;
impinging radiation onto each said portion for producing portion signals from each of said portions respectively;
separately differencing the amplitudes of said portion signals supplied by a portion from each of said sets to produce two remainder signals respectively;
separately summing the portion signals from the portions just differenced and then dividing the remainder signals by said sum signals, respectively; and
adding the quotient signals together to generate an output signal indicative of range.

2. In the method set forth in claim 1, wherein said detector (62) is a square with four square-detecting portions (A, B, C, D) and disposed in a common plane, further including the steps of:
impinging said radiation onto said detector along an axis perpendicular to the place of the detector and forming said radiation into a circular beam cross section when a first range condition exists such that out-of-range conditions result in ovate beams have a major oval axis rotated from along the plane of the detector.

3. In a method of detecting range using a radiation beam having a first separability factor during a first range condition and second separability factors when outside said first range condition;
the method including the steps of:
selecting a detector (62) having a given separability factor and disposing the detector to intercept the radiation beam, then operating the detector to supply an output signal indicative of the relationship of said given separability factor to said first and second separability factors.

4. In the method set forth in claim 3, further including the steps of:
selecting a laser (67) to emit said radiation beam upon a media (30) such that the object deflects the radiation beam;
disposing the detector (62) to intercept the reflected radiation beam;

adjusting the spacing between an objective lens (45) and the media (30) until said detector indicates said first separability factor; and

making said given separability factor equal to said first separability factor such that focus condition is indicated.

5. The method set forth in claim 4, further including the steps of:

selecting a detector (62) having a plurality of symmetrically-located, detecting portions (A, B, C, D) disposed symmetrically with respect to the radiation beam impinging upon the detector; and

electrically processing signals generated by said plurality apportions, including normalizing the output signal from sets of said portion symmetrically with respect to the axis of the detector, irrespective from any axis of the reflected radiation beam.

6. In the method set forth in claim 5, wherein said sets of detecting portions have an inverted relationship to the beam such that the normalization of the signals from the respective sets are antithetic.

7. In a optical device which has means for measuring distance and means for establishing an optical path in said measuring means with the path having a first optical axis;

the improvement including, in combination:

a quad detector (62) disposed in said optical path in a plane transverse to said first optical axis, said quad detector having four detecting portions (A, B, C, D) arranged symmetrically about an axis such that a first set of two of the portions (first and third portions A and C) are aligned on a first diagonal and a second set of two of the portions (second and fourth portions B and D) are aligned on a second diagonal transversely extending to said first diagonal, and circuit means (100, 120, 121, 123, 125, 126, 127, 130) having separate electrical connections to said detecting portions and operative to solve the equation $(A\text{-}B)/(A+B) + (C\text{-}D)/(C+D)$ wherein A, B, C and D in the equation are signals from the detecting portions, respectively.

8. The optical device set forth in claim 7, further including, in combination:

optical recorder means having means for receiving light reflective from an optical disk (30) which indicates focus condition of the light beam at the optical disk and having means directing the reflective light to said optical paths for impinging the reflected light centrally on said detector.

*Fig-1A*
(PRIOR ART)

*Fig-1B*

*Fig-2*

Fig-3

Fig-5A

Fig-5B

Fig-5C

$$\frac{A-B}{A+B} + \frac{C-D}{C+D} = FES$$

$$\frac{(A+B)-(D+C)}{A+B+C+D} = TES$$

Fig. 4